# EUROPEAN PATENT SPECIFICATION

(11) **EP 1 907 833 B1**
(45) Date of publication and mention of the grant of the patent: **27.01.2010**
(21) Application number: 06766116.5
(22) Date of filing: 05.07.2006
(51) Int. Cl.: G01N 27/447

(54) **SEPARATION OF ANALYTES BY MOLECULAR MASS AND CHARGE**
TRENNUNG VON ANALYTEN NACH MOLEKULARGEWICHT UND LADUNG
SEPARATION D'ANALYTES PAR MASSE MOLECULAIRE ET CHARGE

(30) Priority: 05.07.2005 US 695849 P
(43) Date of publication of application: 09.04.2008
(73) Proprietor: Bioactivity Partnership, 76702 Rehovot (IL); Bukshpan, Shmuel, 47203 Ramat Hasharon (IL); Zilberstein, Gleb, 76564 Rehovot (IL)
(72) Inventor: Bioactivity Partnership, 76702 Rehovot (IL); Bukshpan, Shmuel, 47203 Ramat Hasharon (IL); Zilberstein, Gleb, 76564 Rehovot (IL)
(74) Representative: Becker Kurig Straus
(86) International application number: PCT/IL2006/000777
(87) International publication number: WO 2007/004225

(56) References cited:
- DE-A1- 10 343 334
- BJELLQVIST B ET AL: "ISOELECTRIC FOCUSING IN IMMOBILIZED PH GRADIENTS: PRINCIPLE, METHODOLOGY AND SOME APPLICATIONS" JOURNAL OF BIOCHEMICAL AND BIOPHYSICAL METHODS, AMSTERDAM, NL, vol. 6, 1982, pages 317-339, XP008007126 ISSN: 0165-022X
- RIGHETTI PIER GIORGIO ET AL: "How to bring the "unseen" proteome to the limelight via electrophoretic pre-fractionation techniques" BIOSCIENCE REPORTS, vol. 25, no. 1-2, February 2005 (2005-02), pages 3-17, XP002411308 ISSN: 0144-8463
- FORTIS FREDERIC ET AL: "Isoelectric beads for proteome pre-fractionation. II: Experimental evaluation in a multicompartment electrolyzer" PROTEOMICS, vol. 5, no. 3, February 2005 (2005-02), pages 629-638, XP002411309 ISSN: 1615-9853
- RIGHETTI PIER GIORGIO ET AL: "Prefractionation techniques in proteome analysis: The mining tools of the third millennium" ELECTROPHORESIS, vol. 26, no. 2, January 2005 (2005-01), pages 297-319, XP002411310 ISSN: 0173-0835

## Description

### FIELD OF THE INVENTION

The present invention generally relates to the separation of analytes by application of electric field, and more specifically to a novel method and apparatus for the separation of analytes according to their molecular mass and their charge, using a matrix modified with a charged separation agent.

### BACKGROUND OF THE INVENTION

The most widely used techniques for the separation and identification of biochemicals and other analytes involve gel electrophoresis. Currently used matrices for gel electrophoresis include polyacrylamide, agarose, gelatin or other gels formed of cross linked polymers or long chain polymers. In polyacrylamide gel electrophoresis (PAGE), charged proteins are separated in polyacrylamide gels based on their size (molecular mass) in native and denatured form. Various types of polyacrylamide gels exist, that vary in the degree of cross-linking and the nature of the denaturing surfactant included in the gel. The surfactant having the most widespread use is sodium dodecyl sulfate (SDS).

The principle of SDS-PAGE is based on the recognition that the reaction of proteins of a wide molecular weight range with SDS results in the formation of a complex with a constant mass to charge ratio (1.4 g of SDS per 1g of protein). The SDS protein complex is negatively charged. Deposition of a sample of SDS denatured protein in a polyacrylamide gel and application of an electrical voltage will cause the proteins to drift in the gel and will result in a separation by molecular size due to the size dependence of the friction coefficient of the SDS protein complex in the gel for proteins of different sizes. This results in a logarithmic dependence of the mobility of the SDS protein complex on the protein mass. Gels of different densities are utilized to cover specific molecular size ranges. The preferred mode of separation by SDS-PAGE is performed in gradient gels where the density of the polyacrylamide is varied from top of the gel to bottom, typically from 4-24% of incorporated acrylamide and enables the separation in a wide size interval.

Another conventional electrophoretic separation method is isoelectric focusing (IEF), a special technique for separating amphoteric substances such as peptides and proteins in an electric field, across which there is both a voltage and a pH gradient, acidic in the region of the anode and alkaline near the cathode. Each substance in the mixture will migrate to a position in the separation column where the surrounding pH corresponds to its isoelectric point. There, in zwitterion form with no net charge, molecules of that substance cease to move in the electric field. Different amphoteric substances are thereby focused into narrow stationary bands.

A combination of IEF ("first dimension") and SDS-PAGE ("second dimension") is described by Bjellquist et al. in Journal of Biochemical and Biophysical Methods, 6 (1982), pages 317-339.

Another method commonly used for protein separation based on the charge of the protein is ion exchange chromatography (IEC). In IEC, charged substances are separated via column materials that carry an opposite charge. The ionic groups of exchanger columns are covalently bound to the gel matrix and are compensated by small concentrations of counter ions, which are present in the buffer. When a sample is added to the column, an exchange with the weakly bound counter ions takes place. The IEC principle includes two different approaches: anion exchange and cation exchange according to the charge of the ligands on the ion exchange resin.

An additional method for protein separation by the size of the protein is size exclusion chromatography. This method, also known as gel filtration (GPC) or molecular-sieve chromatography, is based on the different size and shape of proteins. Proteins of different sizes penetrate into the internal pores of the beads to different degrees. Small protein molecules are retarded by the column while large molecules pass through more rapidly.

Other methods for protein separation include Capillary Zone Electrophoresis and electrochromatography.

Although these separation techniques are universally accepted and utilized, they suffer from several drawbacks and limitations. For example, the main drawbacks of SDS-PAGE are the limitations in separation of low and high mass proteins (generally <10 kD and >200kD) and the very low mass discrimination for heavy proteins. Furthermore, the use of gradient gels is complicated and labor intensive. This method also suffers from low precision and low repeatability. Finally, the use of high density gels can significantly slow down the separation process.

Other biomolecules such as nucleic acids (e.g., DNA, RNA) can also be separated by gel electrophoresis. For example, nucleic acids can be separated using agarose gels. Currently used techniques for separating nucleic acids suffer from many of the drawbacks and limitations of the techniques used to separate proteins.

There is an unmet need in the art for methods for the separation of biochemicals such as proteins, peptides, amino acids, DNA, RNA and oligonucleotides which are efficient, cost-effective and which can be utilized to separate analytes of a wide molecular weight, size and length range, and which can be adapted to large scale (e.g., purification) and/or automated.

### SUMMARY OF THE INVENTION

The present invention is based on a novel principle for separating analytes such as proteins, peptides, amino acids, DNA, RNA and oligonucleotides and other biomolecules, by controlling the electrophoretic mobility of the analytes in a matrix (e.g., a polymeric gel, porous glass, other porous media, polymeric beads immobilized in compartments by porous membranes, and high viscosity liquids immobilized in compartments by porous membranes) modified with a charged separation agent. The matrix comprises stable, spatially distributed charged regions ordered in a monotonous order preserving sequence, preferably starting with low charge and low charge density regions and ending with high charge regions. The charge density range in the matrix overlaps with that of an oppositely charged analyte complex (*e*.*g*., a denatured protein -SDS complex or a DNA or RNA fragment). When an external electric field is applied to a sample of the charged complex mixture deposited at the low charge end of the matrix, the complex will move through the different charged regions and focusing (immobilization by charge neutralization) of different analytes in different charge regions will occur.

As opposed to conventional separation techniques such as polymeric gels, in which separation is based on the dependence of the migration velocity (mobility) on size and friction, the separation principle of the present invention is based on the total charge of the denatured analyte complex. Since the complex preserves the charge to mass ratio, the total charge of the complex is directly proportional to its weight. In this situation, in a low friction medium, the analytes will move in an electric field with mobility initially only weakly dependent on size and will lose their mobility only when reaching regions where their charge neutralizes.

This principle of charge neutralization for trapping specifically charged species is the principle of operation of ion exchange columns. The present invention is based on the surprising discovery that this concept can be applied to conventional separation systems such as gel electrophoretic systems to generate novel matrices for separating proteins, DNA, RNA and other biomolecules based on their total charge, which corresponds to their molecular mass. Such separation systems have not previously been described.

Thus, the present invention provides a method and a system for the separation of analytes, by subjecting a charged complex of the analytes to an electric field using a matrix (preferably a low friction matrix) comprising a charged separation agent, wherein the analytes are separated on the basis of their molecular weight, as defined in claims 1 and 7.

According to the methods of the present invention, the analyte (*e*.*g*., protein, peptide, amino acid, DNA, RNA or oligonucleotide) mass scale generated by the charge gradient can be designed for any functional dependence of separated mass on distance (for example linear) instead of logarithmic as in standard separation systems such as SDS-PAGE. This provides a significant advantage over SDS-PAGE, since replacement of the logarithmic scale by a linear mass scale provides improved accuracy of mass determination, and allows the extension of the separated mass range into very low and very high mass regions.

When the matrix is a polymeric gel, the methods of the present invention can use any type of gel known in the art. In accordance with a preferred embodiment, the polymeric gel is a polyacrylamide gel. However, other gels can also be used, for example agarose gels, composite polyacrylamide-agarose gels, gelatins and the like. One of the advantages of the present invention is that it favors the use of low density gels to minimize the friction and enable focusing of large proteins in a relatively short time. Suitable gels for this type of separation include but are not limited to low percentage polyacrylamide (*e*.*g*., equal to or less than about 5%) or composite acrylamide agarose gels (*e*.*g*., about 2%-5% acrylamide and about 0.5%-1% agarose).

Another important property of the proposed separation method is the realization that the resolution of a separated band is independent of the dimension of the initial packet and depends only on the gradient of the charge distribution in the separation medium (gel). This property removes the requirement of adding a stacking gel for band compression as generally used in standard SDS-PAGE. Diffusion effects which strongly influence the final dimension of the separated bands in conventional SDS-PAGE, are absent in the new method due to the focusing process.

The methods of the present invention can be used to separate a wide variety of biomolecules and other analytes including proteins, peptides, amino acids, nucleic acids (*e*.*g*., DNA and RNA), and oligonucleotides.

When the analytes to be separated are proteins or peptides, the charged protein complex can typically be prepared by contacting the proteins with a charged denaturing agent, so as to obtain a charged denatured protein complex. The denaturing agent can be any charged reagent (cationic or anionic), and is preferably a detergent. A preferred example of such a denaturing agent is sodium dodecyl sulfate (SDS). However, other anionic or cationic denaturing and complexing agents can be used. Anionic detergents include for example Li dodecyl sulfate and ammonium dodecylsulfate. Cationic detergents which produce a positively charged complex are for example cetyl-methyl-ammonium bromide (CTAB), tetradecyltrimethylammonium chloride, dodecyltrimethylammonium chloride (DOTMAC) and sodium deoxycholate.

The methods described herein are applicable not only to protein and peptide separation, but also to the separation of nucleic acid and oligonucleotides. DNA and other nucleic acid chains are naturally charged, and accordingly the nucleic acids themselves can form the charged analyte complex which is separated using the gels of the present invention.

Generally, the charged separation agent (also referred to herein as charged separation media) is a material which is either positively charged (cationic) or negatively charged (anionic), and can typically be any material that is commonly used in ion exchange separation techniques (*i*.*e*., ion exchange resins). Alternatively, the separation agent can be acrylamido derivatives used for the preparation of isoelectric focusing strips (immobilines).

Suitable gels for use in the methods of the present invention include, but are not limited to, slab gels, planar gels, capillary gels, in-tube gels, gels in discrete channels (*e*.*g*., a gel channel in a solid matrix), separation columns or any other geometry which preserves the charge distribution so that a charge density gradient can be generated. This enables a design where the linear mass resolution can be optimized for different mass regions.

Other suitable media or substrates for use in the methods and systems of the present invention are porous media on which charged anionic or cationic species can be immobilized (porous glass etc.) or high viscosity liquids immobilized in compartments by porous membranes. Another suitable medium can comprise porous polymer beads incorporating the charged separation agent e.g., ion exchange beads) and placed in compartments separated by a porous membrane.

The amount of charged separation agent to be included in the matrix will vary depending on the type of analyte being separated. For example, if the analyte has a high molecular weight, a larger concentration of separation agent will typically be used to achieve a higher charge density and adequate separation. If the analyte has a low molecular weight, lower amounts and concentration of the separation agents will be used. Typical amounts of charged separation agents to be used in the gels of the present invention include from about 0.1 nM to about 400 mM. charged separation agent

The novel methods of the present invention remove most of the limitations of the standard separation techniques, both by extending the mass range to the region of low and high analyte sizes and by improving the mass determination accuracy in the whole range. The advantages of the methods of the present invention over conventional separation systems include: 1) replacement of the logarithmic scale with a pre-designed mass scale (e.g., linear) for improved accuracy of mass determination; 2) extension of the mass range into low and high mass analytes, (e.g., proteins, DNA, RNA etc.); 3) no diffusion effects; 4) no dependence of separated band width on initial packet dimensions; 5) the gel density used in this application is preferably very low which facilitates the separation process (faster drift velocity); 6) no need for gradient gels; 7) no need for stacking gel; 8) cost-effectiveness; and 9) due to the large abundance of ion exchange resins and other charged separation media such as immobilines, the methods of the invention are easy to use, and can be utilized to separate a large variety of analytes of a wide range of mass, size or length.

As demonstrated herein, a significant advantage of the present invention is the ability to separate proteins in the low mass range, e.g., between 1-20 kD. This range is generally not achievable in standard SDS PAGE and is becoming increasingly important due to the interest in low mass peptides and signaling proteins (Peptidome) and in peptides resulting from the digestion of specific proteins. Furthermore, the methods of the present invention allow for fractionation of low mass component from a complex protein mixture by selectively trapping the high mass component.

The present invention thus provides a new and versatile method and matrices for the separation of analytes using separation techniques such as electrophoresis. They are suitable for planar, capillary in-tube electrophoresis, as well as multi-channel arrays of capillaries filled with charge gradient gels, serial arrays of discrete compartments with charge density overlapping a narrow mass range, arrays in a chip format (which can be automated), pre-designed mass focusing arrays for specific protein masses in application for protein and DNA marker diagnostics, multi compartment trapping devices for specific mass ranges suitable for mass fractionation of complex samples of proteins or DNA fragments which are amenable for scale up (purification) and other separation systems using other low friction media, under widely different conditions.

For example, based on the selective trapping (focusing) capability of the charged gels, one can construct a multicompartment system which will fractionate a complex protein or DNA sample by mass (size) by trapping proteins or DNA fragments in specific compartments according to their size (charge).

The availability of many types of charged ion-exchange resins and other charged materials which can be incorporated as charged separation media into gels and other porous media, allows for the extensive use of systems of the invention for separating a large variety of analytes. Most importantly, the ability to generate pre-designed separation gradients provides a tremendous advantage over currently practiced methods, and enables the efficient separation of analytes at very high or very low molecular weights, size and length. In these ways and others, the systems of the present invention are superior to conventional separation systems currently in use.

### BRIEF DESCRIPTION OF THE DRAWINGS

The present invention will be understood and appreciated more fully from the following detailed description taken in conjunction with the appended drawings:
**FIGURE 1a,b,c:** Examples of charge gradients which can be constructed in a separation medium according to the present invention.
**FIGURE 2****:** Mass separation pattern of colored protein molecular weight markers on a slab gel.
**FIGURE 3****:** Distribution of proteins by mass. Vertical scale - mass in kilo-Daltons (kD). Horizontal scale - distance of different bands on the gel image from the upper edge in millimeters.
**FIGURE 4****:** Design of a charge distribution pattern based on Table 2a (I) and 2b (II) (order preserving but non linear). Numbers on vertical scale correspond to the number of composition in tables. The horizontal scale is in kD.
**FIGURE 5****:** Separation pattern of a protein up to 250kD according to the charge distribution of Fig. 4 (protein markers: 4kD -insulin, 22kD myoglobin, 148kD -phosphorylase, 250kD - myosin).
**FIGURE 6****:** Separation of proteins at 400kD (collagen).
**FIGURE 7****:** Separation pattern of proteins in the range of 100-250 kD from a complex mixture of wheat seeds extract
**FIGURE 8****:** Image of low mass protein markers separated on a charge gradient gel.
**FIGURE 9****:** Separation pattern of products of tryptic digest of myoglobin. (Left image - charge gradient gel, Right image- standard PAGE gel)
**FIGURE 10****:** Schematic drawing of a composite gel (upper part-noncharged polyacrylamide trapping section, lower part- low mass protein immobiline gradient gel).
**FIGURE 11****:** Separation image of a mixture of BSA and BSA trypsinization products on a composite gel.
**FIGURE 12****:** Separation image of myoglobin and b-lactoglobulin on a resolving gel in comparison with standard SDS PAGE ( a- charged gel according to the present invention, b- standard gel)
**FIGURE 13****:** Multicompartment mass fractionation device (drawing and separation image of colored protein markers).
**FIGURE 14****:** Schematic drawing of a multicompartment mass fractionation device based on charged liquid compartments.
**FIGURE 15****:** SDS PAGE image of the fractionation results in a two chamber fractionation device.
**FIGURE 16****:** Schematic drawing of a multicompartment mass fractionation device based on selective mass trapping in PA immobiline beads.
**FIGURE 17****:** Schematic drawing of a chip form multicompartment mass fractionation device.
**FIGURE 18****:** Separation image of BSA tryptic digest products on a 70 compartment mass fractionation chip.
**FIGURE 19****:** Separation pattern of DNA fragments.
**FIGURE 20****:** Distribution of DNA fragments along the separation gel. Vertical axis - length of fragments in bp, horizontal axis - distance on gel from start in mm x1.72.

### DETAILED DESCRIPTION OF THE PRESENT INVENTION

The present invention is based on the discovery of a novel separation matrix for separating proteins, peptides, amino acids, DNA, RNA, oligonucleotides and other biomolecules. The matrix (e.g., a low-friction matrix) is composed of a medium such as a polymeric gel or another suitable porous medium such as porous glass, porous polymer beads immobilized in compartments by porous membranes or a viscous liquid immobilized in a porous membrane compartment modified with a charged separation agent, which is distributed across the matrix in charged regions (which can be continuous or discrete) ordered in a monotonous order preserving sequence, preferably starting with low charge and charge density regions and ending with high charge. A charged analyte complex (*e*.*g*., a denatured protein -SDS complex) is loaded onto the matrix, preferably at its low charge end. When an external electric field is applied, the complex migrates through the different charged regions and focusing (immobilization by charge neutralization) of different analytes in different charge regions will occur. The separation principle of the present invention is based on the total charge of the analyte complex, which is directly proportional to its molecular weight, or size, or length. Since analytes of different sizes possess different charges, they will migrate differently across the matrix, thereby achieving separation according to the molecular weight, size or length of the analytes.

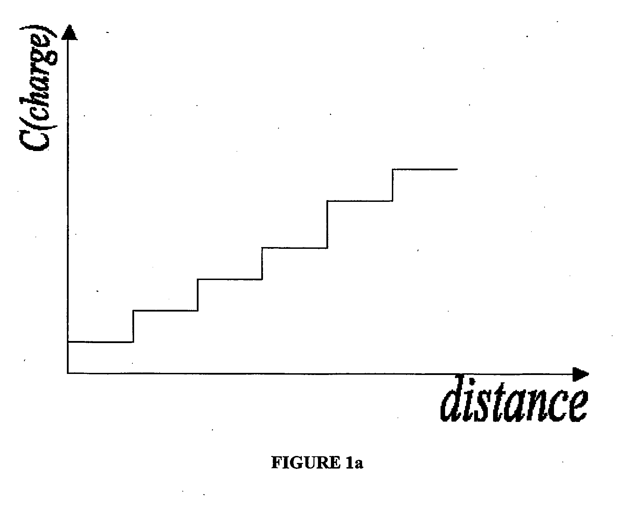

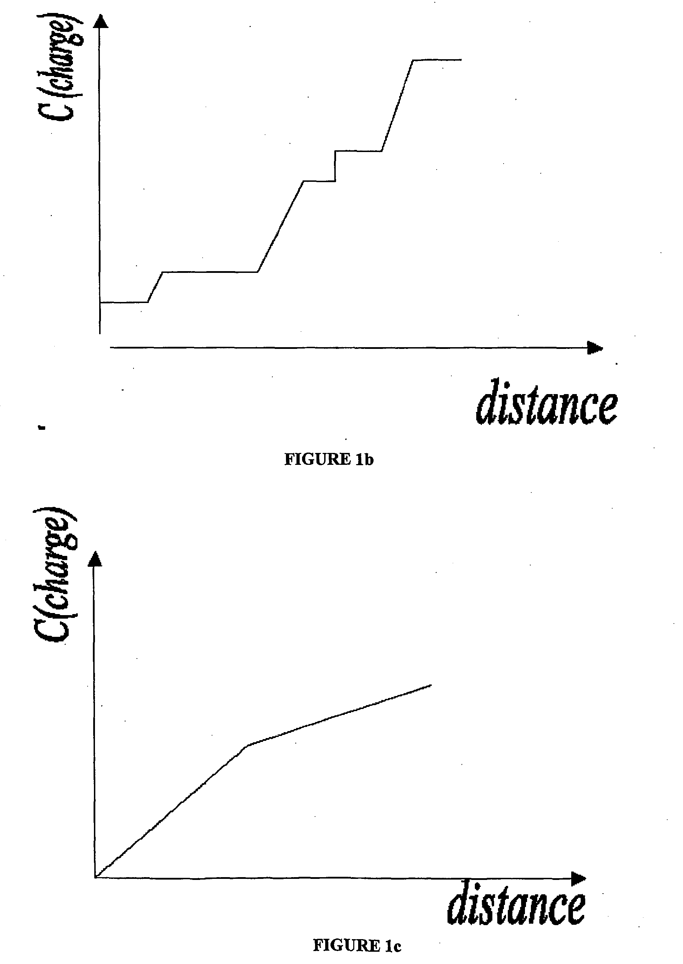

According to the methods of the present invention, the analyte (*e*.*g*., protein, peptide, amino acid, DNA, RNA or oligonucleotide) mass scale generated by the charge gradient has a pre-designed functional mass distance dependence (for example linear) instead of logarithmic as in standard separation systems such as SDS-PAGE. Non-limiting examples of functional mass dependence which can be incorporated in a matrix are presented in Fig. 1a,1b and 1c. This provides a significant advantage over SDS-PAGE, since replacement of the logarithmic scale by a linear mass scale provides improves accuracy of mass determination, and allows the extension of the separated mass range into very low and very high mass proteins. The mass distance dependence can be designed to have different slopes (for linear gradients) in different regions of the charge distribution, allowing high resolution separation of analytes at a desired molecular weight range or different functional dependence in different regions. This property is very important for improved separation in the analysis of mass regions with high abundance of different proteins.

In accordance with a preferred embodiment, the charged separation agent is distributed throughout the matrix so as to create a charge density gradient. Preferably, the gradient is created by distributing the charged regions in a monotonous (continuous or discrete) sequence across the gel. The term "monotonous" means ordered and gradual increase or decrease in the charge density gradient. The gradient preferably starts with low charge density regions and ends with high charge density regions.

An alternative embodiment of charge distribution in a matrix is represented by a constant distribution of the charged species through the matrix. When biomolecules are electrophoretically driven through such a charged matrix each biomolecule will acquire an effective charge corresponding to the difference between its specific charge and the charge of the matrix. The resulting electrophoretic mobility will be modified according to that effective charge and result in the redistribution of the mass bands as compared to the pattern in a non-charged matrix. Proper choice of the constant charge allows to improve the spatial resolution of specific mass bands. Such a charged matrix can be used, for example, as a resolving gel when improved separation of closely spaced bands is required.

### Matrix and Charged Separation Agents

A large number of methods and materials exist which enable the design of charged separation media with spatially distributed charge. Generally, all those methods are based on incorporation of anionic or cationic ion exchange resins at varying concentrations and compositions. The applicants of the present invention have discovered that these resins, when incorporated in and/or immobilized on matrices such as gels, porous glass, beads or viscous liquid compartments, create charged local environments like in ion exchange media. Designing the local concentration of the active ion exchange species according to the expected charge distribution of the denatured analytes, *e*.*g*., proteins, will provide the medium to separate and segregate the analytes according to their size.

The matrix used in the present invention is preferably a low friction matrix. The mobility of proteins or DNA fragments when driven by an electric field in a medium depends on the charge of the biomolecule and on the friction in the separation medium. Therefore, it is advantageous to minimize the friction component to reach the focusing (charge neutralization) position in a reason time. A "low friction matrix" as used herein is defined as a matrix in which the friction coefficient is comparable to the friction coefficient in a 4% polyacrylamide or lower. Friction coefficients of polyacrylamide gels are routinely know to a person of skill in the art. Ranges of translational friction coefficient can be derived from published atat on mobilities and viscosities of various concentration gels, as is known to a person of skill in the art. See, for example, Reptation Mechanism in Protein- Sodium-Dodecylsulfate (SDS) Polyacrylamide -Gel Electrohpresis Authors: Xuan-Hui Guo and Sow-Hsin Chen, Physical Review Letters Volume 64, Number 21 (1990), Pages 2579-2582 and references therein. The derived values of friction coefficients for gels between 4%- 20% for proteins between ∼ 20kD -200kD are between about 10⁻⁵ - 10⁻³ Newton/cm/sec. The low friction matrices of the present invention have, in representative embodiments, friction coefficients that are within this range, preferably at the lower end thereof, or friction coefficients that are lower than 10⁻⁵ - 10⁻³ Newton/cm/sec.

The matrix can comprise low density solid gels like polyacrylamide or agarose which can incorporate the charged separation agents. Alternatively, liquid matrices can be used which are capable of incorporating the charged molecules. Such liquids can be for example very low concentration (e.g. 1%) polyacrylamide which can copolymerize with immobilines. Another possibility is linear polymers, which due to the lack of cross linking behave like a viscous liquid. Another embodiment can be mixtures of non charged liquids (water) and polymer beads incorporating the charged separation agent (e.g., custom prepared ion exchange beads, polyacrylamide beads with immobilines, etc.). Since the charge neutralization occurs in the beads only their density should be high enough to stop all the biomolecules drifting through the medium.

When the charged matrix is either a highly viscous liquid or a solid liquid mixture (beads) there is a need to contain the medium representing a specific charge density in a compartment isolated from its neighbor compartments to prevent mixing. This is achieved by placing the charged medium between separators comprising uncharged membrane. Such a membrane should allow the transport of the charged biomolecules but prevent intermixing of the content of each compartment. The material of the uncharged membrane can be a polymeric membrane like agarose, polyacrylamide, cellulose etc. It should be as thin as possible to minimize the drift time and still support the content of the compartment. The separation medium (liquid or liquid -bead mixture) is preferably not immobilized on the membrane. The membrane serves only as a physical separator.

Examples of such ion exchange materials suitable as the charge separation agents include various organic ion exchange resins composed high molecular weight polyelectrolytes. Non-limiting examples of suitable ion exchange resins are:
1) Dowex 66 Anion-Exchange Resin
2) Dowexl-X2 (AG 1-X2) Anion-Exchange resin
3) Dowex 1-X4 (AG 1-4X) Anion-Exchange resin
4) Dowex 1-X8 (AG 1-4X) Anion exchange resin
5) AG MP-1
6) Amberlite™ IRA-401
7) Amberlite™ IRA-402
8) Amberlite™ IRA-400
9) Amberlite™ CG-400
10) Amberlite™ IRA-904
11) DUOLITE^{® 113}
12) DUOLITE^{® A161}
13) Dowex Ion Exchange Resin ^{2-X8 (AG2-x8)}
14) Dowex Ion Exchange Resin ^{2-X10 (AG 2X10)}
15) Amberlite™ IRA-410
16) DUOLITE ^{A 116}
17) DUOLITE^{® A162}
18) Biorex 9
19) Biorex 5
20) DUOLITE ^{A 303}
21) DUOLITE ^{A378}
22) Dowex Ion Exchange Resin ^{3-X4A (AG 3-X4A)}
23) Amberlite™ IR-45
24) amberlit IRA-67
25) Amberlite™ IRA-93

Another example of suitable separation agents are acrylamido buffers used for preparation of Isoelectric Focusing Strips (immobilines). Immobilines are acrylamide derivatives that are weak acids or weak bases, and have the general structure CH₂=CH-CO-NH-R, where R contains either a carboxyl or an amino group.

Another way of preparing stable charge density gradients in gel matrices is by incorporating (polymerizing, immobilizing) polypeptide sequences in the gel by methods known from affinity gel electrophoresis (using, for example, hemoglobin, lectin etc.).

For negatively charged gradients, it is also possible to utilize immobilized DNA fragments.

Desired charge densities can be obtained by using any of these reagents, alone or in any combination.

It should be apparent to a person of skill in the art that the present invention is not limited to the use of the above described reagents, and that any other reagent capable of creating a stable charge gradient across a polymeric gel or other porous matrix can be used in the methods and systems of the present invention.

The principles of the present invention differ significantly from the principle of ion exchange chromatography. Ion exchange chromatography is based on the amphoteric property of proteins and the specific protein charge is determined by the pH of the buffer solution which contains the protein mixture. The ion exchange column is designed to trap by charge neutralization that specific charged protein while all other proteins pass through the column. In accordance with the present invention when applied to the separation of proteins, each protein acquires a specific charge by complexation with a denaturing agent such as SDS and the charge is proportional to the mass of the protein. Therefore, according to the present invention, a charge gradient medium is used, and the proteins are neutralized by their charge (mass) independent of the buffers.

The amount of charged separation agent to be included in the matrix will vary depending on the type of analyte being separated. For example, if the analyte has a high molecular weight, a larger amount of separation agent will typically be used to achieve adequate separation. If the analyte has a low molecular weight, lower amounts of the separation agents will be used. Generally, in order to generate an immobilized charge density gradient in a separation medium, one has to calculate the required concentration of the charge generating species to be incorporated in the gel at each point of the gradient. The charge density is estimated from the concentration and the dissociation constant of the charging compound. Table 1 below presents some examples of a design of a concentration gradient in a polyacrylamide gel by utilizing an immobiline charged separation agent with pH =9.3. The known dissociation constant for this particular immobiline is ∼0.1 at room temperature.

Assuming standard band geometry as in SDS-PAGE, the charge densities and volumes in this table correspond to charge neutralization of maximum quantities of 1 microgram of specific protein.

Table 1 presents the compositions of a charge density gradient constructed for molecular masses of from 0.1kD to 300kD.

**Table 1. Immobiline concentration to create a charge density gradient in gel**

| **MW of proteins (kDa)** | **Concentration of immobilines pH 9.3 (nM)** | **Charge group density** |
|---|---|---|
| 0.1 | ∼1 | |
| 1 | 20 | |
| 2 | 40 | |
| 3 | 60 | |
| 4 | 80 | |
| 5 | 100 | 10*13/cm³ |
| 10 | 595 | |
| 15 | 1090 | |
| 20 | 1585 | |
| 25 | 2080 | |
| 30 | 2575 | |
| 35 | 3070 | |
| 40 | 3565 | |
| 45 | 4060 | |
| 50 | 4555 | 50X10*14/cm³ |
| 55 | 5050 | |
| 60 | 5545 | |
| 65 | 6040 | |
| 70 | 6535 | |
| 75 | 7030 | |
| 80 | 7525 | |
| 85 | 8020 | |
| 90 | 8515 | |
| 95 | 10000 | |
| 100 | 10495 | 10*16/cm³ |
| 105 | 11 | |
| 110 | 11.5 | |
| 115 | 12 | |
| 120 | 12.5 | |
| 125 | 13 | |
| 130 | 13.5 | |
| 135 | 14 | |
| 140 | 14.5 | |
| 145 | 15 | |
| 150 | 15.5 | |
| 155 | 16 | |
| 160 | 16.5 | |
| 165 | 17 | |
| 170 | 17.5 | |
| 175 | 18 | |
| 180 | 18.5 | |
| 185 | 19 | |
| 190 | 19.5 | |
| 195 | 20.0 | |
| 200 | 20.5 | |
| 205 | 21 | |
| 210 | 21.5 | |
| 215 | 22 | |
| 220 | 22.5 | |
| 225 | 23 | |
| 230 | 23.5 | |
| 235 | 24 | |
| 240 | 24.5 | |
| 245 | 25 | |
| 250 | 25.5 | |
| 255 | 26 | |
| 260 | 26.5 | |
| 265 | 27 | |
| 270 | 27.5 | |
| 275 | 28 | |
| 280 | 28.5 | |
| 285 | 29 | |
| 290 | 29.5 | |
| 295 | 30.0 | |
| 300 | 30.5 | |

Tables 2A and 2B present the compositions of a charge density gradient composed from a mixture of immobilines constructed for molecular masses of up to 250kD.

**Table 2B and 2B. A charge density gradient composed from a mixture of immobilines for molecular weight up to 250kD**

**Table 2A:**

| **FR #** | **Immobiline pK buffers used in (**µ**l)** | | | | **1 M acetic acid (**µ**l)** | **sum (**µ**l)** | **sum (ml)** | **Stock (ml)** | **Water (ml)** |
|---|---|---|---|---|---|---|---|---|---|
| | **pH** | ***4.6*** | ***7*** | ***9.3*** | | | | | |
| 0 | 7.00 | 215.00 | 168.15 | 116.85 | 14.00 | *514.0* | 0.514 | 0.333 | 0.153 |
| 1 | 7.15 | 205.51 | 176.50 | 117.98 | 15.00 | *522.1* | 0.522 | 0.333 | 0.145 |
| 2 | 7.28 | 197.05 | 183.84 | 119.02 | 16.00 | *523.2* | 0.523 | 0.333 | 0.144 |
| 3 | 7.41 | 188.97 | 191.04 | 120.00 | 17.00 | *524.4* | 0.524 | 0.333 | 0.143 |
| 4 | 7.54 | 180.90 | 198.13 | 120.98 | 18.00 | *525.5* | 0.526 | 0.333 | 0.141 |
| 5 | 7.67 | 172.51 | 205.50 | 122.00 | 19.00 | *526.7* | 0.527 | 0.333 | 0.140 |
| 6 | 7.82 | 163.44 | 213.47 | 123.10 | 20.00 | *527.8* | 0.528 | 0.333 | 0.139 |
| 7 | 7.98 | 153.26 | 222.42 | 124.33 | 21.00 | *529.0* | 0.529 | 0.333 | 0.138 |
| 8 | 8.16 | 141.55 | 232.71 | 125.75 | 22.00 | *530.2* | 0.530 | 0.333 | 0.137 |
| 9 | 8.37 | 128.38 | 244.28 | 127.35 | 23.00 | *531.4* | 0.531 | 0.333 | 0.136 |
| 10 | 8.59 | 114.96 | 256.08 | 128.97 | 24.00 | *532.6* | 0.533 | 0.333 | 0.134 |
| 11 | 8.78 | 101.27 | 266.78 | 130.45 | 25.00 | *532.3* | 0.532 | 0.333 | 0.135 |
| 12 | 8.94 | 92.26 | 276.02 | 131.73 | 26.00 | *534.9* | 0.535 | 0.333 | 0.132 |
| 13 | 9.09 | 83.09 | 284.08 | 132.84 | 27.00 | *536.1* | 0.536 | 0.333 | 0.131 |
| 14 | 9.22 | 74.84 | 291.33 | 133.84 | 28.00 | *537.2* | 0.537 | 0.333 | 0.130 |
| 15 | 9.34 | 67.13 | 298.10 | 134.77 | 29.00 | *538.3* | 0.538 | 0.333 | 0.129 |
| 16 | 9.46 | 59.66 | 304.67 | 135.68 | 30.00 | *539.5* | 0.539 | 0.333 | 0.128 |
| 17 | 9.58 | 52.13 | 311.29 | 136.59 | 31.00 | *540.6* | 0.541 | 0.333 | 0.126 |
| 18 | 9.71 | 44.20 | 318.26 | 137.56 | 32.00 | *541.7* | 0.542 | 0.333 | 0.125 |
| 19 | 9.85 | 35.42 | 325.97 | 138.62 | 33.00 | *542.8* | 0.543 | 0.333 | 0.124 |
| 20 | 10.01 | 25.62 | 334.58 | 139.58 | 34.00 | *543.8* | 0.544 | 0.333 | 0.123 |

**Table 2B:**

| ***FR #*** | **Immobiline pK buffers used in (**µ**l)** | | | | | ***1M acetic acid (***µ***l)*** | ***SUM (***µ***L)*** | **SUM *(ML)*** | **Stock *(ML)*** | **Water** |
|---|---|---|---|---|---|---|---|---|---|---|
| | ***PH*** | ***4.6*** | ***7.0*** | ***8.5*** | ***9*.*3*** | | | | | |
| 0 | 7.00 | 168.76 | 144.21 | 87.03 | 0.00 | 15.00 | *415.0* | 0.415 | 0.333 | 0.252 |
| 1 | 7.15 | 161.58 | 146.78 | 86.07 | 5.57 | 16.00 | *416.0* | 0.416 | 0.333 | 0.251 |
| 2 | 7.29 | 154.76 | 149.23 | 85.16 | 10.87 | 17.00 | *417.0* | 0.417 | 0.333 | 0.250 |
| 3 | 7.43 | 147.97 | 151.66 | 84.23 | 16.13 | 18.00 | *418.0* | 0.418 | 0.333 | 0.249 |
| 4 | 7.57 | 140.97 | 154.17 | 83.31 | 21.57 | 19.00 | *419.0* | 0.419 | 0.333 | 0.248 |
| 5 | 7.72 | 133.57 | 156.81 | 82.32 | 27.31 | 20.00 | *420.0* | 0.420 | 0.333 | 0.247 |
| 6 | 7.89 | 125.68 | 159.64 | 81.26 | 33.42 | 21.00 | *421.0* | 0.421 | 0.333 | 0.246 |
| 7 | 8.06 | 117.40 | 162.61 | 80.15 | 39.85 | 22.00 | *422.0* | 0.422 | 0.333 | 0.245 |
| 8 | 8.23 | 108.97 | 165.62 | 79.03 | 46.39 | 23.00 | *423.0* | 0.423 | 0.333 | 0.244 |
| 9 | 8.40 | 100.67 | 168.60 | 77.91 | 52.83 | 24.00 | *424.0* | 0.424 | 0.333 | 0.243 |
| 10 | 8.57 | 92.64 | 171.47 | 76.84 | 59.06 | 25.00 | *425.0* | 0.425 | 0.333 | 0.242 |
| 11 | 8.73 | 84.80 | 174.24 | 75.80 | 65.06 | 26.00 | *425.9* | 0.426 | 0.333 | 0.241 |
| 12 | 8.88 | 77.44 | 176.81 | 74.80 | 70.85 | 27.00 | *426.9* | 0.427 | 0.333 | 0.240 |
| 13 | 9.03 | 70.27 | 179.48 | 73.84 | 76.42 | 28.00 | *428.0* | 0.428 | 0.333 | 0.239 |
| 14 | 9.17 | 63.37 | 181.95 | 72.92 | 81.77 | 29.00 | *429.0* | 0.429 | 0.333 | 0.238 |
| 15 | 9.30 | 56.74 | 184.33 | 72.03 | 86.91 | 30.00 | *430.0* | 0.430 | 0.333 | 0.237 |
| 16 | 9.44 | 50.30 | 186.63 | 71.17 | 91.91 | 31.00 | *431.0* | 0.431 | 0.333 | 0.236 |
| 17 | 9.57 | 43.90 | 188.92 | 70.31 | 96.87 | 32.00 | *432.0* | 0.432 | 0.333 | 0.235 |
| 18 | 9.70 | 37.37 | 191.26 | 69.44 | 101.94 | 33.00 | *433.0* | 0.433 | 0.333 | 0.234 |
| 19 | 9.85 | 30.42 | 193.75 | 68.51 | 107.33 | 34.00 | *434.0* | 0.434 | 0.333 | 0.233 |
| 20 | 10.01 | 22.92 | 196.44 | 67.50 | 113.15 | 35.00 | *435.0* | 0.435 | 0.333 | 0.232 |

Table 3 presents the compositions of a charge density gradient composed from a mixture of immobilines constructed for molecular masses of up to 400D

**Table 3. Composition of immobilines for mass range of 400 kD**

| **FR #** | **Immobiline pK buffers used in (**µ**l)** | | | | | **1M Acetic ACID (**µ**L)** | **SUM (**µ**L)** | **SUM (ML)** | **Stock (ML)** | **Water** |
|---|---|---|---|---|---|---|---|---|---|---|
| | ***PH*** | ***4.6*** | ***7.0*** | ***8.5*** | ***9.3*** | | | | | |
| 1 | | 15.60 | 70.44 | 89.58 | 204.00 | | | | | |
| 2 | | 20.50 | 68.25 | 96.98 | 220.00 | | | | | |

Table 4 presents selected compositions of immobilines to focus DNA fragment of specific length. The values of specific immobilines is given in microliters

**Table 4. Composition of immobilines for specific DNA fragments**

| | | | | |
|---|---|---|---|---|
| **6.2** | **7** | **8.5** | **9.3** | |
| 10.50 | 8.00 | 41.00 | 22.00 | **IX** |
| 10.60 | 8.60 | 49.90 | 34.50 | **VIII** |
| 10.60 | 8.90 | 55.30 | 36.80 | **VII** |
| 10.60 | 9.20 | 58.80 | 47.80 | **VI** |
| 10.60 | 9.50 | 64.20 | 50.30 | **V** |
| 10.60 | 9.90 | 67.70 | 65.70 | **IV** |
| 10.60 | 10.20 | 76.10 | 71.20 | **III** |
| 10.60 | 10.50 | 56.60 | 85.70 | **II** |
| 10.60 | 10.80 | 56.80 | 89.90 | **I** |

### Analyte Complex

The methods of the present invention can be used to separate a wide variety of biomolecules and other analytes including but not limited to proteins, peptides, amino acids, nucleic acids (*e*.*g*., DNA and RNA), and oligonucleotides. A charged complex of the analyte is separated using the systems of the present invention, and separation according to the molecular weight, size or length of the analytes is achieved.

When the analytes to be separated are proteins or peptides, a charged protein complex can typically be prepared by contacting the proteins with a denaturing agent, so as to obtain a charged denatured protein complex. The denaturing agent can be any reagent which, when contacted with the proteins, results in a charged protein complex. Typically the denaturing agent is a detergent, and is either positively or negatively charged. A preferred example of such a denaturing agent is sodium dodecyl sulfate (SDS). However, it is apparent to a person of skill in the art that the SDS-protein complex is only an example of charged denatured complexes of proteins known in the art, and that other denaturing and complexing reagents can be used in the methods of the present invention. For example, anionic detergents are for example Li dodecyl sulfate and ammonium dodecylsulfate. Cationic detergents which produce a charged complex (positively charged) are for example cetyl-methyl-ammonium bromide (CTAB), tetradecyltrimethylammonium chloride, dodecyltrimethylammonium chloride (DOTMAC) and sodium deoxycholate. The methods of the invention are applicable for the separation of protein-detergent complexes as listed above.

The methods described herein are applicable not only to protein and peptide separation, but also to the separation of nucleic acid and oligonucleotides (*e*.*g*., DNA fragments). As opposed to the case of denatured protein complexes where the complex is charged due to the presence of the charged denaturing agent, DNA and other nucleic acid chains are naturally charged. Accordingly, when the analytes to be separated are nucleic acids, the nucleic acids themselves can form the charged analyte complex which is then separated using the porous matrix systems of the present invention. Since the total charge of the DNA is proportional to its mass, by using the methods of the invention, one can obtain focusing of different charges (lengths) for DNA fragments in a linear scale, thus improving the discrimination and resolution. This is opposite to standard separation methods for DNA, which are characterized by mobilities which depend logarithmically on the length of the fragment.

### Matrix Systems

In one embodiment, the present invention provides systems that can be used to separate analytes based on the molecular weight of the analytes. In one currently preferred embodiment, the matrix is a polymeric gel. In accordance with this preferred embodiment, the gels of the present invention are polymeric gels which have been modified to include a charged separation agent. The gels contain charged regions that result in a density gradient, which can be continuous or discrete, distributed across the gel. Preferably the charge gradient is created from a low charge to a high charge.

Any type of polymeric gel known in the art can be used in the methods and systems of the present invention. In accordance with a preferred embodiment, the polymeric gel is a polyacrylamide gel. However, other gels can also be used, for example agarose gels, composite polyacrylamide-agarose gels, gelatin, and the like.

Another matrix suitable for this invention are viscous liquids like for example very low density polyacrylamide or other matrices in which charged separation agents can be incorporated.

One of the disadvantages of conventional gel systems such as SDS-PAGE is the requirement to use gradient gels with varying polymer densities to span larger mass ranges. Conducting the separation with dense gels can slow down the separation process due to a slow drift velocity. The methods of invention utilize low density gels or dense liquids to minimize the friction and enable fast focusing of large proteins in a short time. Suitable gels for this type of separation include but are not limited to low percentage polyacrylamide (e.g., about 5% or less) or composite acrylamide agarose gels (about 2%-5% acrylamide and about 0.5%-1% agarose). The latter gel system permits the use of very low percentage polyacrylamide as the sieving matrix and substrate for covalently bonded charged species while the agarose provides mechanical support.

Suitable gels for use in the methods of the present invention include, but are not limited to, slab gels, planar gels, capillary gels, in-tube gels, discrete gel lanes in channels, separation columns or any other geometry which preserves the charge distribution. This will enable a design where the linear mass resolution can be optimized for different mass regions.

For preparing the modified gels of the present invention, the charged separation agent is typically mixed with the rest of the constituents of the gel, and polymerization and casting of the gel is carried out as known to a person of skill in the art for each gel system.

In the case of a polyacrylamide gel, the method of preparation of a slab gel with a built-in charge gradient can be prepared by a standard method of casting of gels analogous to the preparation of Immobilized pH Gradient (IPG) strips with the appropriately designed quantities of ion exchange resin or immobiline. The preparation of IPG strips has been described in, for example in: ELECTROPHORESIS IN PRACTICE by Reiner Westermeier, Second Edition, VCH, 1997.

In the case of a slab gel format the methods of the present invention can replace all standard methods of SDS-PAGE. In this case the SDS denatured proteins are subjected to an electrophoretical procedure in a way equivalent to the currently used method and using the same equipment that is conventionally used in the art.

The matrices of the present invention can be in the form of a thin or thick planar film gel, typically having a thickness ranging from 0.5 mm to 3 mm, and dimensions of typically from 2cm x3 cm up to 18cm x 20cm, they can be filled in a capillary or tubes typically having a thickness of about 50-500 µm, for example 100 µm, 75µm and 50 µm or they can be in the form of a single or multiple channels with cross section of 100 microns x 100 microns or 1mm x 1mm and length of 1cm up to 20 cm.

Advantageously, the matrices of the present invention can be applied and extended to multi array systems such as serial arrays of discrete compartments with charge density overlapping a specific mass range bridged by a low friction medium, arrays in a chip format, pre-designed mass focusing arrays for specific protein masses in application for protein and DNA marker diagnostics,, multi compartment trapping devices for specific mass ranges suitable for mass fractionation of complex samples of proteins or DNA fragments and amenable for scale up (purification) and other separation systems using other low friction media, under widely different conditions. For example, based on the selective trapping (focusing) capability of the charged gels, one can construct a multicompartment system which will fractionate a complex protein or DNA sample by mass (size) by trapping proteins or DNA fragments in specific compartments according to their size (charge).

The methods of the invention replace all SDS-PAGE separation procedures, and can be used for detection of very small quantities of proteins in a discrete compartment with a specific charge. An important application of the technology relates to the capability of the separation of proteins by mass with a predetermined resolution (0.5-1kD) in a convenient 1 or 2 dimensional format and size.

The chip-like device, in one embodiment, comprises discrete channels (mass pixels) of charged gels each pixel possessing a charge density for focusing of a specific mass.. The discrete pixels can be serially interconnected with a low friction uncharged gel (for example agarose) bridge or with liquid interconnects. The chip device can be automated using automation techniques commonly known in the art.

Such an interconnected linear array will cover a specific mass range with the pre-determined mass resolution. Parallel positioned linear arrays, each corresponding to a different mass interval will result in a 2D array covering a desired mass range from very low mass peptides up to high mass proteins. For example the total dimensions of a 2D chip with 1kd resolution in the range of 1-500kD can typically have dimensions of about 7x7 cm.

Using the same configuration it is possible to design a chip which will focus only predetermine proteins for diagnostic purposes. If employed with fluorescent color markers or radiolabeled markers, such a chip will enable fast readout for detection of specific protein markers.

The invention can also be used to focus protein-antibody complexes in pre-designed compartments for diagnostic applications, as well as for high resolution separation of DNA fragments.

Aside from polymeric gels (e.g., polyacrylamide gels, agarose gels and composition polyacrylamide-agarose gels), other suitable media or substrates for use in the methods of the present invention are media on which charged anionic or cationic species can be immobilized, such as porous glass, high viscosity liquid polymers, polymeric beads etc.

### EXPERIMENTAL DETAILS SECTION

### Example 1 - Protein Separation

An 8 cm long and 0.7 cm wide charge gradient 10% polyacrylamide slab gel was prepared by stacking and polymerizing 40 x 2 mm high layers of polyacrylamide solution mixed with various concentrations of 9.3 pH immobiline according to Table 1. This resulted in a gel with an incorporated charge gradient starting from very low charge and charge density and ending at a high charge. The charge gradient was calculated to be linear to an appreciable degree.

After polymerization, a sample of SDS denatured colored protein mass weight markers (0.14% SDS solution incubated with 0.1% marker solution in DDW composed of alpha and beta insulin, aprotinine, lisozyme, trypsin inhibitor, carbonic anhydrase and ovalbumin) was deposited by standard methods on the slab gel and submitted to an electric field of 100V for 2 hours in a DDW buffer.

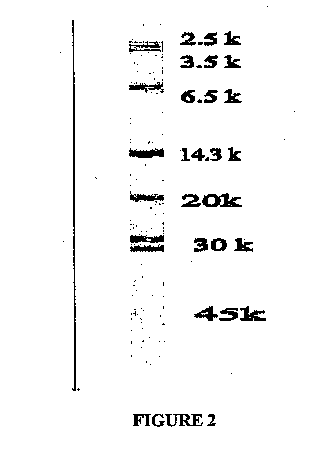

A mass separation pattern obtained by the separation method is shown in Figure 2. As shown, a high quality separation pattern of mass markers in the mass range from 2.5 kD and up to 45 kD was obtained. The results demonstrate the applicability of the method for protein separation by mass.

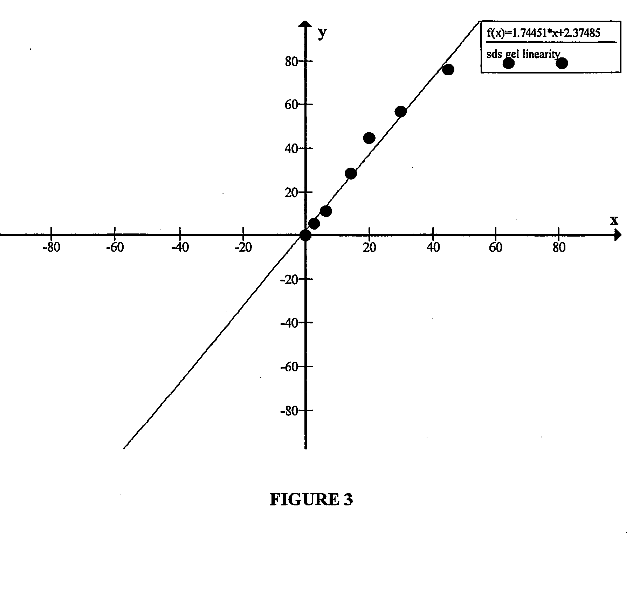

The mass distribution of the proteins in the gel was shown to be to a high degree linear in distance. Figure 3 is a graph showing the distribution of the proteins by mass. The vertical scale represents the mass in kilo Daltons (kD), and the horizontal scale represents the distance in millimeters of different bands on the gel image from the upper edge. The replacement of the logarithmic scale of conventional electrophoretic systems with the linear scale provides significant advantages, such as improved accuracy of mass determination, and the ability to optimize the separation for different mass regions, including very low and very high molecular weight ranges.

### Example 2 -Separation of High Molecular Weight Proteins and Separation of a Complex Mixture

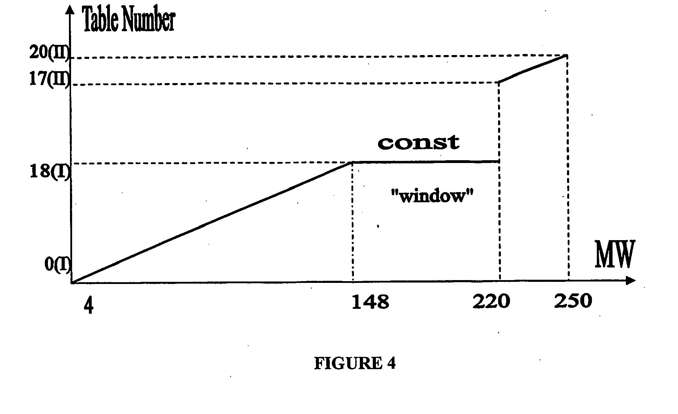

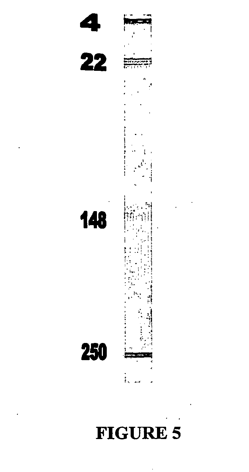

This Example demonstrates the design flexibility of the charge density gradients of the present invention. A charge gradient extending to high protein mass was designed according to Table 2, which is based on a combination of several immobilines with different pH. Based on this gradient, a slab gel of 4% polyacrylamide with dimensions of 8cm long, 2cm wide and 0.5 mm thickness was polymerized from 2mm stacked layers according to the values set forth in table 2 in a sequence as presented in Fig.4. A protein sample consisting of: insulin (4kD), myoglobin (22kD), Phosphorylase (148kD) and Myosin was separated by the methods of invention. The separation time was 3h at 150V in a DDW buffer. A mass separation pattern obtained by the separation method is provided in Figure 5. As shown, a high quality separation pattern of a protein of with a molecular weight 250kD was achieved.

The results demonstrate the applicability of the method for separation of proteins of high molecular weights and the capability of the method to design gels for specific mass regions.

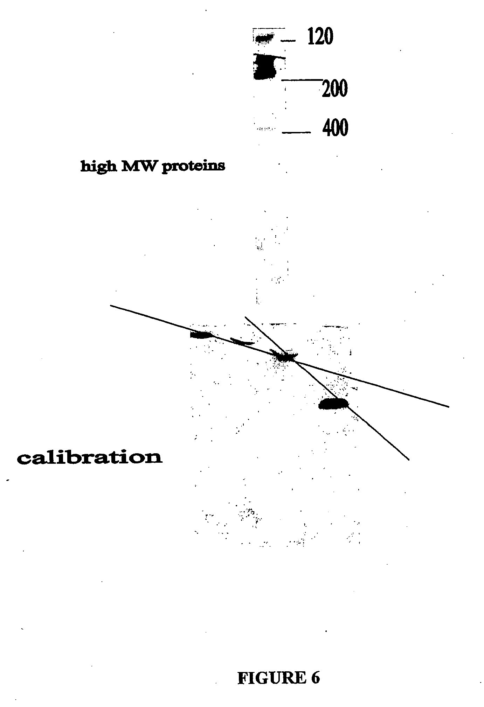

The methods of the present invention can also be used to separate proteins of even higher molecular weights. Figure 6 shows the extension of the range to proteins to 400 kD, using a gradient gel based on Table 3.

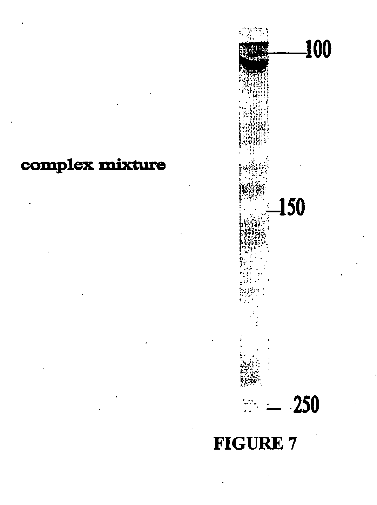

In addition, a linear charge gradient gel based on Table 2a and 2b was prepared by the above-described method. A denatured sample consisting of an extract of wheat seeds was separated using the procedure as set forth in Example 2. Figure 7 presents the separation pattern of proteins above 100kD.

### Example 3. Separation of Low Mass Proteins

This example demonstrates the applicability of the invention to separate proteins in the low mass range between 1-20kD. This range is generally not achievable in standard SDS PAGE and is becoming more and more important due to the interest in low mass peptides and signaling proteins (Peptidome) and in peptides resulting from the digestion of specific proteins.

The proteins used in this example were molecular mass markers (M.W. range 2.512-16.949) (Amersham - GE, Code N 80-1129-83). The 4% PA Immobiline gradient gel used in this example was prepared with Immobiline buffer pKa 10.3 (Cat no 01741, Fluka). The following starting monomer solutions were prepared:

| **High concentration Immobiline solution (H-IMB)** | | | |
|---|---|---|---|
| AA (acrl.+bis) | 1.32 | ml | 4.0 % |
| Glycerol 86% | 2.3 | ml | 20.0 % |
| dist.Water | 2.88 | ml | |
| Gel buffer* | 2.50 | ml | 122 mM |
| 10% SDS | 0.100 | ml | 0.10 % |
| Immob. 10.3 | 0.900 | ml | 18.0 mM |
| TEMED | 5 | µl | |
| Total volume | 10.0 | ml | |

| **Low concentration Immobiline solution** | | | | |
|---|---|---|---|---|
| AA(acrl.+bis) | 1.32 | ml | 4.0 | % |
| Glycerol 86% | 0.00 | ml | 0.0 | % |
| dist.Water | 6.08 | ml | | |
| Gel buffer* | 2.50 | ml | 122 | mM |
| 10% SDS | 0.10 | ml | 0.10 | % |
| Immob. 10.3 | 0.00 | ml | 0.00 | mm |
| TEMED | 5 | µl | | |
| Total volume | 10.0 | ml | | |

The above solutions were used to cast and polymerize gradient minigels 0.75mm thick (0-18 mM of Immobiline) by employing a commercial gradient mixer (Amersham).

The Gel Buffer (0.48 M Tris/Acetate pH - 6.4) composition was as follows:

| | | | |
|---|---|---|---|
| 1. | TRIZMA (Cat N T1503 -Sigma) | | - 5.48ml g |
| 2. | Acetic acid (Glacial Cat. N A6283) | to pH 6.4 | ∼2.56 ml |
| 3. | SDS | | -0.1 g |
| 4. | Water 18 mega ohm | up to | - 100 ml |

### Starting materials:

| | | |
|---|---|---|
| 30% AcrylamideBis Solution | Cat N161-0156 | Bio Rad. |
| TEMED | Cat N 161-0800 | Bio-Rad |
| Ammonium Persulfate | Cat N161-0501 | Bio-Rad |

The protein separation was run on a horizontal Multiphor II system (Amersham) with an anode and cathode buffer as follows:
Cathode electrode Buffer (0.1M Tris, 0.1M Tricine, and 0.1% SDS)
Anode electrode Buffer (0.1M Tris, 0.1M Acetate, and 0.1% SDS)

### Running conditions:

| | | |
|---|---|---|
| 100V | (∼3.0 mA; 0.3W) | - 25min |
| 300V | (<10 mA; <3W) | -22h |

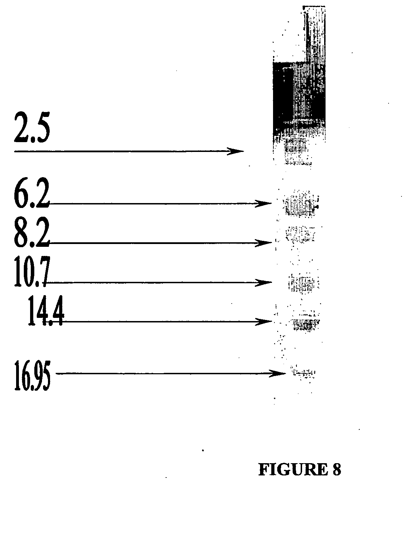

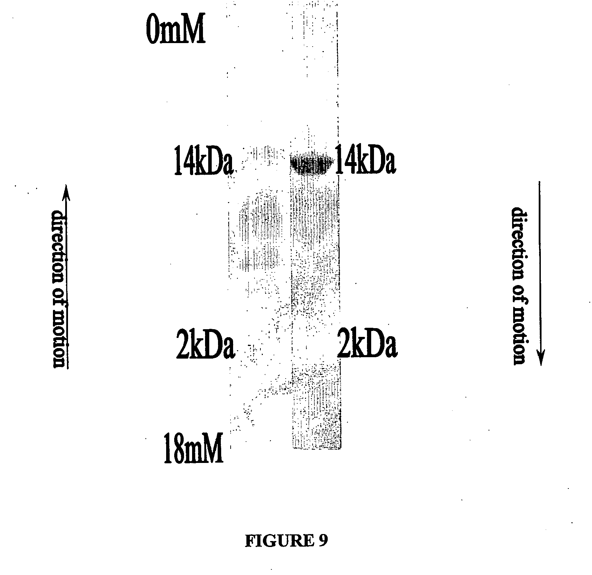

The image of the separation of the low mass markers is shown in Fig. 8. Figure 9 presents a separation image obtained from the electrophoresis of products of a tryptic digest of myoglobine as separated on the above described immobiline gradient gel (left) together with the separation result as obtained on a standard SDS PAGE (right).

### Example 4. Selective Fractionation and Gel Separation of Low Mass Proteins

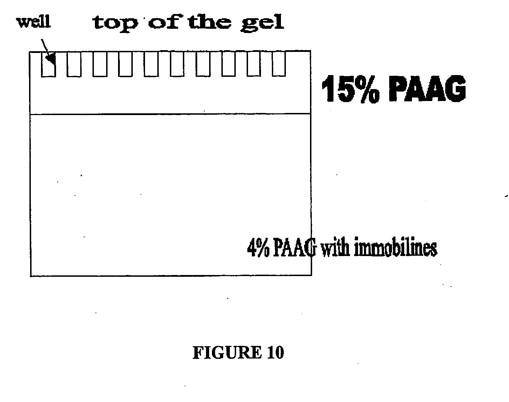

This example demonstrates the applicability of the method of the invention for fractionation of low mass component from a complex protein mixture by selectively trapping the high mass component. For that purpose a polyacrylamide gel as presented in Fig.10 was prepared. The gel consisted of two parts: the upper layer of 15% PAAG (15mm length, 85 width) served as the trapping layer for the untreated high mass BSA and a 4% PAAG immobiline gradient gel (77mm length; 85mm width) for the separation of peptides in the range up to 20 kD.

The immobiline gradient gel (4% PA, 0-25 mM Immobiline concentration) was prepared by the following procedure: Immobiline buffer pKa 10.3 (Cat no 01741, Fluka) was used for creation Immobiline gradients.

### Monomer solutions:

| **High concentration Immobiline solution** | | | | |
|---|---|---|---|---|
| AA (acrl.+bis) | 1.32 | ml | 4.0 | % |
| Glycerol 86% | 2.3 | ml | 20.0 | % |
| dist.Water | 2.88 | ml | | |
| Gel buffer* | 2.50 | ml | 122 | mM |
| 10% SDS | 0.100 | ml | 0.10 | % |
| Immob.10.3 | 0.900 | ml | 25.0 | mM |
| TEMED | 5 | µl | | |
| Total volume | 10.0 | ml | | |

| **Low concentration Immobiline solution** | | | | |
|---|---|---|---|---|
| AA(acrl.+bis) | 1.32 | ml | 4.0 | % |
| Glycerol 86% | 0.00 | ml | 0.0 | % |
| dist.Water | 6.08 | ml | | % |
| Gel buffer* | 2.50 | ml | 122 | mM |
| 10% SDS | 0.10 | ml | 0.10 | % |
| Immob. 10.3 | 0.00 | ml | 0.00 | mM |
| TEMED | 5 | µl | | |
| Total volume | 10.0 | ml | | |

The above solutions were used to cast and polymerize gradient minigels 0.75mm thick (0-25 mM of Immobiline) by employing a commercial gradient mixer (Amersham).

The Gel Buffer Composition was:

| | | |
|---|---|---|
| 1. | TRIZMA (Tris[hydroxymethyl] aminomethane Cat N T1503 -Sigma) | - 5.48 g |
| 2. | Acetic acid (Glacial Cat. N A6283) to pH 6.4 | ∼2.56 ml |
| 3. | SDS | - 0.1 g |
| 4. | Water 18 megohm up to | - 100 ml |

The starting materials were:

| | | |
|---|---|---|
| 30% AcrylamideBis Solution | Cat N 161-0156 | Bio Rad. |
| TEMED | Cat N 161-0800 | Bio-Rad |
| Ammonium Persulfate | Cat N161-0501 | Bio-Rad |

The protein separation was run on a horizontal Multiphor II system (Amersham) with an anode and cathode buffer as follows:
Cathode electrode Buffer (0.1M Tris, 0.1M Tricine, and 0.1% SDS)
Anode electrode Buffer (0.1M Tris, 0.1M Acetate, and 0.1% SDS)

Running conditions for the electrophoresis were:
100V (current ∼3.0 mA;power consumption- 0.3W) duration- 25min
300V ( current<10 mA; power consumption<3W) duration -5h

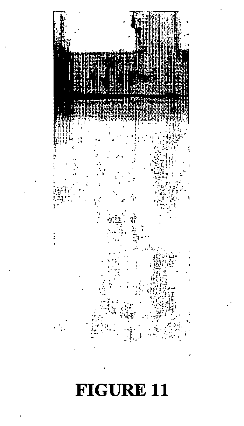

The resulting gel image obtained in this example is shown in Fig 11.

### Example 5. Resolving Gel

The following example demonstrates the resolving capabilities of a gel with a constant density of immobilines.

A 7% polyacrylamide gel incorporating 5mM of immobilines of pK 12 was polymerized. A sample comprising a mixture of two proteins with a ∼1kD mass difference (β- lactoglobulin and myoglobin) was electrophoretically separated on the charged gel in a standard Leamly system.

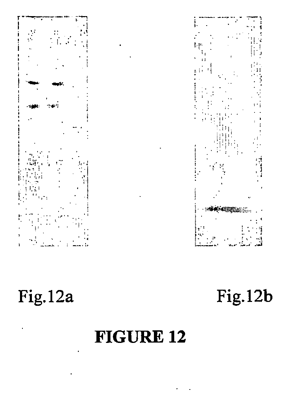

The resulting pattern in Fig. 12a shows a large separation of those two fractions. Fig.12b shows the corresponding pattern as obtained in a standard Leamly system in a 7% polyacrylamide non charged gel in which almost no separation of the two bands is observed.

### Example 6. Gel Multicompartment Fractionation Device

The following example demonstrates an important application of the methods of invention. Based on the selective trapping (focusing) capability of the charged gels, one can construct a multicompartment system which will fractionate a complex protein or DNA sample by mass(size) by trapping proteins or DNA fragments in specific compartments according to their size(charge).

The device is constructed as a serial system of immobiline gel membrane in increasing order of Immobiline concentration , each membrane separated from its neighbour by a low density agarose gel partition. For this example a device was prepared with 25, 1.5 mm thick 4% polyacrylamide immobiline compartments, arranged in a steplike gradient of immobiline concentration and interspaced with and 1% agarose membrane 0.2mm thick. The steplike gel-immobiline gradient was prepared by pouring and polymerizing the PA gel solutions in forms created by the agarose membranes. The compositions and polymerization procedures were like shown in the previous examples.

For the electrophoretic separation protein SDS complex markers were deposited in a buffer compartment at the low immobiline concentration side and driven through the system by an applied electric field.

Buffers as in examples 3 and 4 were employed. The protein sample consisted of three colored proteins- insulin (2.5kD), aprotinin (6.3 kD) and trypsin inhibitor(14.3)
The running conditions were:
Voltage- 500V. Running time- 2 hours

The result of the experiment show a localization of the colored proteins in their apropriate compartments.

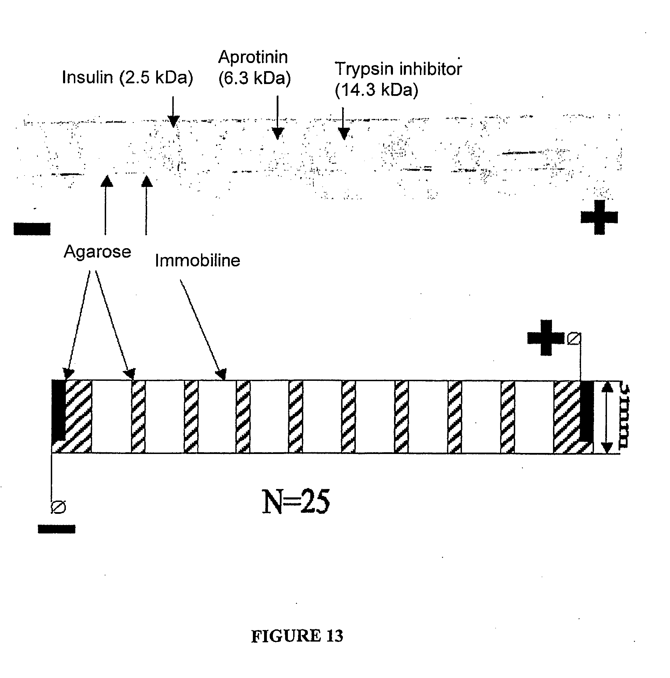

Fig. 13 presents an image of the result and a schematic drawing of the device.

### Example 7. Liquid Multicompartment Mass fractionation Device

This example demonstrates the performance of a multicompartment fractionation device in which the charge neutralization medium consists of a viscous liquid in the form of a 1% Polyacrylamide with immobilines and is used for fractionation of a complex protein mixture into fractions covering different mass ranges.

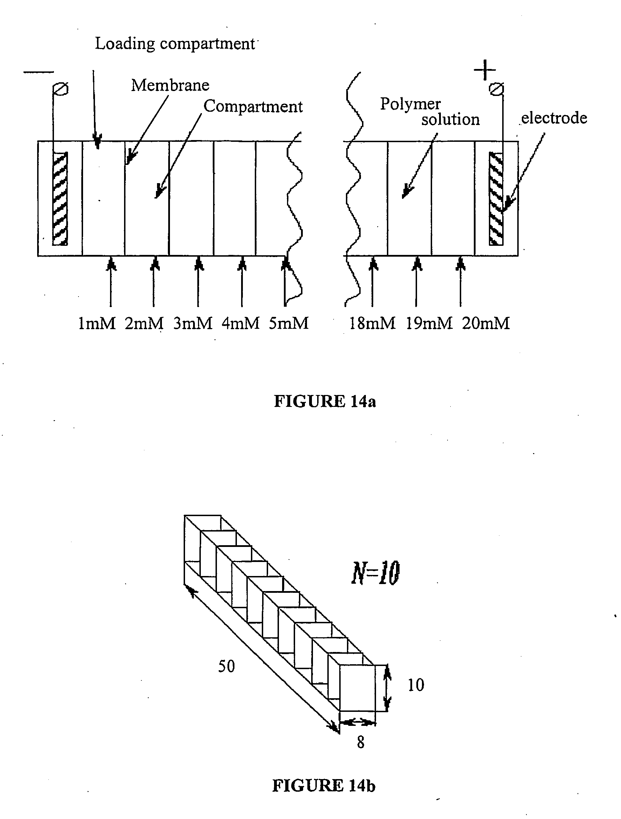

The device was constructed as presented in Fig. 14a and 14b with the following materials:
Compartment wall- a 15% PAAG (0.75mm-thickness);
Compartment material: 1% Polyacrylamide with immobilines

The starting materials were:
Acrylamide (Cat.N. 161-0108 BioRad); Immobiline (Immobiline buffer pKa 10.3 (Cat no 01741, Fluka)); TEMED (Cat N 161-0800, Bio-Rad);
Ammonium Persulfate (Cat N161-0501, Bio-Rad); sodium dodecyl sulfate (Cat. N L3771, Sigma).

The composition of the 1% polyacrylamide was as follows:

| | | |
|---|---|---|
| Acrylamide | 1.0 | % |
| dist. Water | | |
| Gel buffer | 122 | mM |
| SDS | 0.10 | % |
| Immobilines 10.3 | 0-20.0 | mM |
| Ammonium persulfate | | |
| TEMED | | |

For the purpose of this example a two compartment device was prepared. A sample consisting of a mixture of BSA and products of tryptic digest of BSA was deposited in the sample chamber of the device. A two buffer system as in previous examples was employed. The device run under 100 V for 10 hours. Following the experiment the content of each compartment was placed in a pocket of a standards SDS PAGE gel and electrophoretically separated together with a protein marker sample for the mass range up to 45 kD.

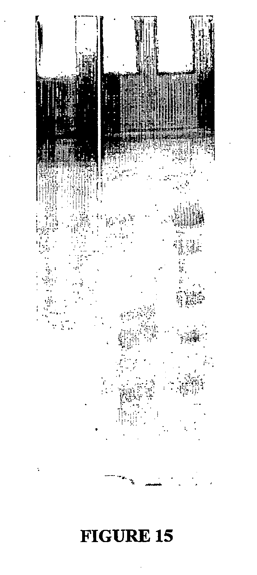

The resulting separation pattern is presented in Fig. 15. As can be seen each compartment contained trapped a different mass fraction- left image covering the large mass, central image the light mass and the right line representing the commercial mass marker sample.

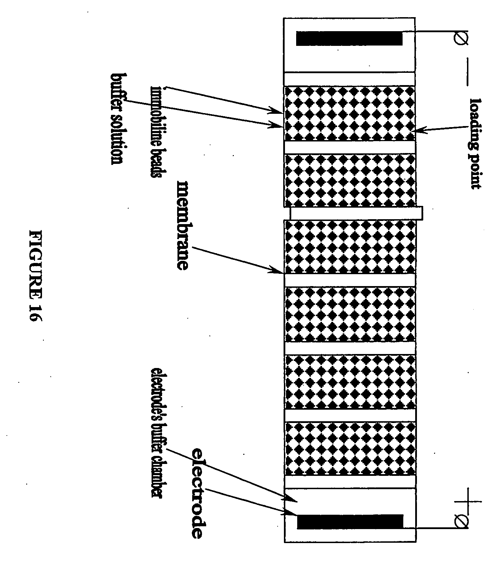

Another set-up showing an alternative embodiment of the multi compartment system is shown in Figure 16.

### Example 8. Multi-Compartment Mass Fractionation Chip

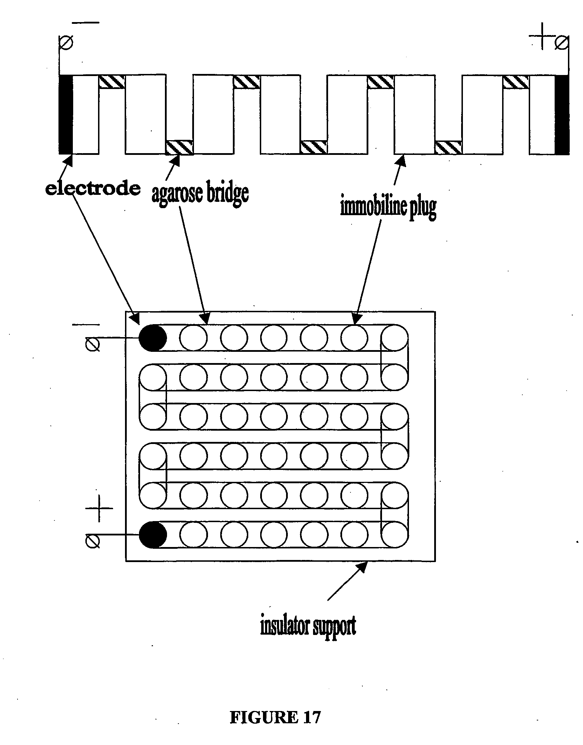

This example demonstrates the concept of the multi-compartment chip representing an important application of the methods of invention. A multi compartment chip was prepared according to the design as shown in Fig. 17. 70 holes of 1mm-diameter and; 1mm-length were machined in a PMMA slab. Each hole was filled with a 4% polyacrylamide immobiline solution to create a serial step like gradient of immobiline concentration (0-35mM). The resulting PA immobiline plugs were interconnected by 1% agarose bridges. Immobiline buffer pKa 10.3 (Cat no 01741, Fluka) was used for creation of the immobiline gradients. Immobiline gradient solutions were prepared as in previous examples.

A sample of BSA tryptic digest was deposited into the sample compartment and electrophoretically driven along the immobiline gradient.
The running conditions were as follows:

| | | |
|---|---|---|
| 100V | (∼3.0 mA; 0.3W) | - 25min |
| 200V | ( <10 mA; <3W) | -2h |

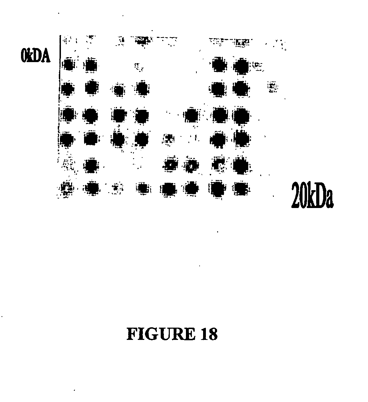

Following the separation the chip was stained by Commassie Blue and proteins accumulated in different compartments were visualized.. The resulting image is shown in Fig.18.

### Example 9- Separation of DNA Fragments

A discrete ladder of immobiline mixtures was polymerized in a 4% polyacrylamide gel to prepare a strip of 7 cm long.

A mixture of DNA fragments in the range of from 100bp to 1100bp was separated on that strip by electrophoresis. The applied voltage was 200 V and the run time was 3.5 hours.

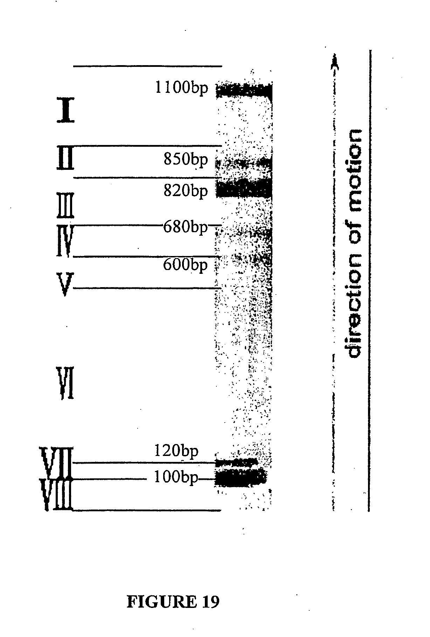

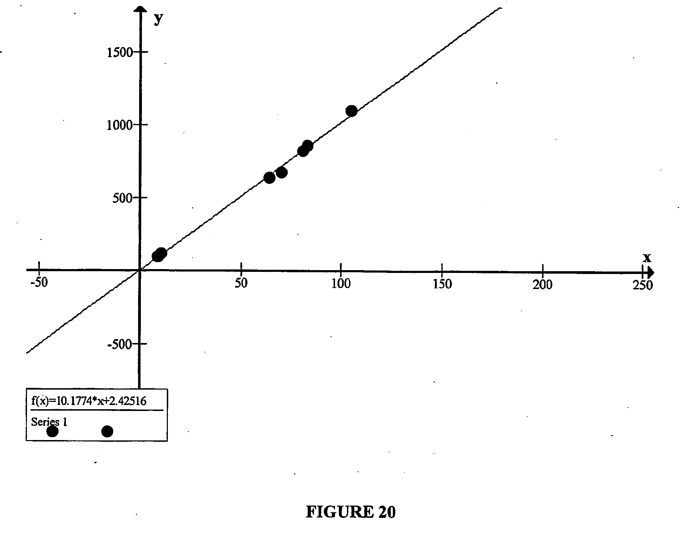

Fig. 19 presents the pattern obtained. The roman numerals correspond to different fragments. The distribution of the fragments along the gel strip is linear to a high degree as shown in Fig. 20.

## Claims

1. A method for the separation of analytes according to their molecular weight, comprising the steps of:
subjecting a charged complex of said analytes to an electric field using a matrix comprising a charged separation agent,
wherein the charged separation agent is distributed throughout the matrix so as to create a charge density gradient,
thereby separating said analytes according to their charge and molecular weight.

2. The method according to claim 1, wherein
the matrix is a porous matrix; or
said analytes are separated by electrophoresis; or
the dependence of the mobility of the charged complex on the molecular weight of the analytes is pre-determined; or
the charge gradient is from a low charge density to a high charge density; or
the charge separation agent is evenly distributed throughout the matrix; or
the separation agent and the analyte complex have opposite charges; or
said separation agent is positively charged; or
said separation agent is negatively charged; or
said separation agent is an ion exchange resin; or
said separation agent is an immobiline; or
said analytes are selected from the group consisting of amino acids, polypeptides, proteins, peptides, nucleic acids such as DNA, RNA, and oligonucleotides; or
said matrix is selected from the group consisting of a slab gel, a planar gel, an in-tube gel, a capillary gel, a gel channel in a solid matrix., multi-channel capillary arrays comprising charge gradient gels, serial arrays of discrete compartments comprising charge density gels, arrays in a chip format, mass focusing arrays for pre-selected protein masses, and multi-compartment trapping devices for pre-selected mass ranges.

3. The method according to claim 1, wherein the matrix is selected from the group consisting of a polymeric gel, porous glass, high viscosity liquid and polymeric beads.

4. The method according to claim 3, wherein
the high viscosity liquid and polymeric beads are separated in compartments by a porous membrane; or
the polymeric gel is a polyacrylamide gel.

5. The method according to claim 1, wherein said charged analyte complex is formed by contacting said analytes with a charged denaturing agent.

6. The method according to claim 5, wherein
said denaturing agent is a detergent; or
said denaturing agent is negatively charged, preferably wherein said denaturing agent is selected from the group consisting of sodium dodecyl sulfate (SDS), lithium dodecyl sulfate and ammonium dodecylsulfate; or
said denaturing agent is positively charged, wherein preferably said denaturing agent is selected from the group consisting of cetyl trimethyl ammonium bromide (CTAB), tetradecyltrimethyl ammonium chloride, dodecyltrimethylammonium chloride (DOTMAC) and sodium deoxycholate.

7. A system for the separation of analytes according to their molecular weight, comprising:
a charged complex of said analytes; and
a matrix comprising a charged separation agent, wherein the charged separation agent is distributed throughout the matrix so as to create a charge density gradient.

8. The system according to claim 7,
wherein the matrix is a porous matrix; or
wherein the dependence of the mobility of the charged complex on the molecular weight of the analytes is pre-determined; or
wherein the charge gradient is from a low charge density to a high charge density; or
wherein the charge separation agent is evenly distributed throughout the matrix; or
wherein said matrix is selected from the group consisting of a slab gel, a planar gel, an in-tube gel, a capillary gel, a gel channel in a solid matrix, multi-channel capillary arrays comprising charge gradient gels, serial arrays of discrete compartments comprising charge density gels, arrays in a chip format, mass focusing arrays for pre-selected protein masses, and multi-compartment trapping devices for pre-selected mass ranges; or
in the form of a multi-channel array of capillaries; or
in the form of a chip comprising a plurality of compartments, each compartment comprising a matrix comprising a charged separation agent.

9. The system according to claim 8, wherein the matrix is selected from the group consisting of a polymeric gel, open pore porous glass, high viscosity liquid, porous polymer beads, and porous polymeric gel.

10. The system according to claim 9, wherein the high viscosity liquid and pourous polymer beads are separated in compartments by a porous membrane.

11. The system according to claim 9, wherein the polymeric gel is a polyacrylamide gel.

12. The system according to claim 11, wherein said analytes are separated by electrophoresis.

13. The system according to claim 7, wherein said analytes are selected from the group consisting of amino acids, polypeptides, proteins, peptides, nucleic acids such as DNA, RNA, and oligonucleotides.

## Patentansprüche

1. Verfahren zum Auftrennen von Analyten entsprechend ihres Molekulargewichts, das die Schritte umfasst:
Aussetzen eines geladenen Komplexes der Analyte einem elektrischen Feld unter Verwendung einer Matrix, die ein geladenes Auftrennungsmittel umfasst, wobei das geladene Auftrennungsmittel durchgehend durch die Matrix verteilt ist, dass ein Ladungsdichtegradient erzeugt wird,
dabei Auftrennen der Analyte entsprechend ihrer Ladung und ihres Molekulargewichts.

2. Verfahren nach Anspruch 1, wobei
die Matrix eine poröse Matrix ist, oder
die Analyte durch Elektrophorese aufgetrennt werden, oder
die Abhängigkeit der Mobilität des geladenen Komplexes von dem Molekulargewicht der Analyte vorbestimmt ist, oder
der Ladungsgradient von einer geringen Ladungsdichte zu einer hohen Ladungsdichte verläuft, oder
das Ladungsauftrennungsmittel gleichmäßig durchgehend durch die Matrix verteilt ist, oder
das Auftrennungsmittel und der Analytkomplex entgegensetzte Ladungen aufweisen, oder
das Auftrennungsmittel positiv geladen ist, oder
das Auftrennungsmittel negativ geladen ist, oder
das Auftrennungsmittel ein Ionentauscherharz ist, oder
das Auftrennungsmittel ein Immobilin ist, oder
die Analyte aus der Gruppe ausgewählt sind, bestehend aus Aminosäuren, Polypeptiden, Proteinen, Peptiden, Nukleinsäuren wie DNA, RNA und Oligonukleotiden, oder
die Matrix ist ausgewählt aus der Gruppe bestehend aus einem Plattengel, einem Planargel, ein in einer Röhre befindlichem Gel, einem Kapillarengel, einem Gelkanal in einer festen Matrix, Mehrkanal Kapillararrays, die Ladungsgradienten-Gele umfassen, seriellen Arrays diskreter Kompartimente, die Ladungsdichte-Gele umfassen, Arrays in Chip-Format, Massenfokussierungsarrays für vorausgewählte Proteinmassen, und Multi-Kompartiment-Einfangeinrichtungen für vorausgewählte Massenbereiche.

3. Verfahren nach Anspruch 1, wobei die Matrix ausgewählt ist aus der Gruppe bestehend aus einem Polymergel, porösem Glas, hoch visköser Flüssigkeit und polymeren Kügelchen.

4. Verfahren nach Anspruch 3, wobei
die hoch visköse Flüssigkeit und die polymeren Kügelchen durch eine poröse Membran in Kompartimente getrennt sind, oder
das polymere Gel ein Polyacrylamid-Gel ist.

5. Verfahren nach Anspruch 1, wobei der geladene Analytkomplex durch Kontakt der Analyte mit einem geladenen Denaturierungsmittel geformt wird,

6. Verfahren nach Anspruch 5, wobei
das Denaturierungsmittel ein Detergens ist, oder
das Denaturierungsmittel negativ geladen ist, wobei vorzugsweise das Denaturierungsmittel ausgewählt ist aus der Gruppe bestehend aus Natriumdodecylsulfat (SDS), Lithiumdodecylsulfat und Ammoniumdodecylsulfat, oder
das Denaturierungsmittel positiv geladen ist, wobei vorzugsweise das Denaturierungsmittel ausgewählt ist aus der Gruppe bestehend aus Cetyltrimethylammoniumbromid (CTAB), Tetradecyltrimethylammoniumchlorid, Dodecyltrimethylammoniumchlorid (DOTMAC) und Natriumdesoxycholat.

7. System zur Auftrennung von Analyten entsprechend ihres Molekulargewichts, umfassend:
einen geladenen Komplex der Analyte, und
eine Matrix, die ein geladenes Auftrennungsmittel umfasst, wobei das geladene Auftrennungsmittel durchgehend durch die Matrix verteilt ist, um so einen Ladungsdichtegradienten zu erzeugen.

8. System nach Anspruch 7,
worin die Matrix eine poröse Matrix ist, oder
worin die Abhängigkeit der Mobilität des geladenen Komplexes von dem Molekulargewicht der Analyte bestimmt ist, oder
worin der Ladungsgradient von einer geringen Ladungsdichte zu einer hohen Ladungsdichte verläuft, oder
worin das Ladungsauftrennungsmittel gleichmäßig durchgehend durch die Matrix verteilt ist, oder
worin die Matrix ausgewählt ist aus der Gruppe bestehend aus einem Plattengel, einem Planargel, einem in einer Röhre befindlichen Gel, einem Kapillarengel, einem Gelkanal in einer festen Matrix, Mehrkanal-Kapillararrays, die Ladungsgradienten-Gele umfassen, serielle Arrays diskreter Kompartimente, die Ladungsdichte-Gele umfassen, Arrays in Chip-Format, Massenfokussierungsarrays für vorausgewählte Proteinmassen, und Multi-Kompartiment-Einfangeinrichtungen für vorausgewählte Massenbereiche, oder
in der Form eines Mehrkanal-Arrays von Kapillaren, oder
in der Form eines Chip, der mehrere Kompartimente umfasst, worin jedes Kompartiment eine Matrix umfasst, die ein geladenes Auftrennungsmittel umfasst.

9. System nach Anspruch 8, worin die Matrix ausgewählt ist aus der Gruppe bestehend aus einem polymeren Gel, porösem Glas mit offenen Poren, hoch visköser Flüssigkeit, porösen polymeren Kügelchen und porösem polymerem Gel.

10. System nach Anspruch 9, worin die hoch visköse Flüssigkeit und die porösen polymeren Kügelchen durch eine poröse Membran in Kompartimente getrennt sind.

11. System nach Anspruch 9, worin das polymere Gel ein Polyacrylamid-Gel ist.

12. System nach Anspruch 11, worin die Analyte durch Elektrophorese aufgetrennt werden.

13. System nach Anspruch 7, worin die Analyte ausgewählt sind aus der Gruppe bestehend aus Aminosäuren, Polypeptiden, Proteinen, Peptiden, Nukleinsäuren wie DNA, RNA und Oligonukleotiden.

## Revendications

1. Un procédé pour la séparation d'analytes selon leur masse moléculaire comprenant les étapes de :
soumettre un complexe chargé desdits analytes à un champ électrique utilisant une matrice comprenant un agent de séparation chargé dans lequel l'agent de séparation chargé est distribué au travers de la matrice de sorte à créer un gradient de densité de charge, séparant de ce fait lesdits analytes selon leur charge et leur masse moléculaire.

2. Le procédé selon la revendication 1 dans lequel
la matrice est une matrice poreuse ; ou
lesdits analytes sont séparés par électrophorèse ; ou
la dépendance de la mobilité du complexe chargé de la masse moléculaire des analytes est prédéterminée ; ou
le gradient de charge va d'une densité de charge basse à une densité de charge élevée ;
ou
l'agent de séparation est uniformément distribué au travers de la matrice ; ou
l'agent de séparation et le complexe d'analytes possèdent des charges opposées ; ou
ledit agent de séparation est chargé positivement ; ou
ledit agent de séparation est chargé négativement ; ou
ledit agent de séparation est une résine échangeuse d'ions ; ou
ledit agent de séparation est une immobiline ; ou
lesdits analytes sont sélectionnés à partir du groupe consistant en acides aminés, polypeptides, protéines, peptides, acides nucléiques tels que ADN, ARN et oligonucléotides ; ou
ladite matrice est sélectionnée à partir du groupe consistant en un gel en plaque, un gel planaire, un gel en tube, un gel capillaire, un canal de gel, une matrice solide, des rangées de capillaires à canaux multiples comprenant des gels de gradient de charge, des rangées en séries de compartiments séparés comprenant des gels de densité de charge, des rangées en un format de puce électronique, des rangées de focalisation de masse pour des masses de protéines présélectionnées et des dispositifs de piégeage à compartiments multiples pour rangées de masses présélectionnées.

3. Le procédé selon la revendication 1 dans lequel la matrice est sélectionnée à partir du groupe consistant en un gel de polymère, du verre poreux, du liquide à viscosité élevée et des lits de polymère.

4. Le procédé selon la revendication 3 dans lequel
le liquide à viscosité élevée et les lits de polymère sont séparés en compartiments par une membrane poreuse ;
ou le gel polymère est un gel de polyacrylamide.

5. Le procédé selon la revendication 1 dans lequel ledit complexe d'analyte chargé est formé en contactant lesdits analytes avec un agent dénaturant.

6. Le procédé selon la revendication 5 dans lequel
ledit agent dénaturant est un détergent ; ou
ledit agent dénaturant est chargé négativement, de préférence dans lequel ledit agent est sélectionné à partir du groupe consistant en dodécylsulfate de sodium (SDS), dodécylsulfate de lithium et dodécylsulfate d'ammonium ; ou
ledit agent dénaturant est chargé positivement, de préférence dans lequel ledit agent est sélectionné à partir du groupe consistant en bromure de cétyl-triméthyl ammonium (CTAB), chlorure de tétradécyl-triméthyl ammonium, chlorure de dodécyl-triméthyl ammonium (DOTMAC) et déoxycholate de sodium.

7. Un système pour la séparation d'analytes selon leur masse moléculaire comprenant :
un complexe desdits analytes chargé ; et
une matrice comprenant un agent de séparation chargé dans lequel l'agent de séparation chargé est distribué au travers de la matrice de sorte à créer un gradient de
densité de charge.

8. Le système selon la revendication 7 dans lequel
la matrice est une matrice poreuse ; ou
dans lequel la dépendance de la mobilité du complexe chargé de la masse moléculaire des analytes est prédéterminée ; ou
dans lequel le gradient de charge va d'une densité de charge basse à une densité de charge élevée ; ou
dans lequel l'agent de séparation chargé est uniformément distribué au travers de la matrice ; ou
dans lequel ladite matrice est sélectionnée à partir du groupe consistant en gel en plaque, un gel planaire, un gel en tube, un gel capillaire, un canal de gel dans une matrice solide, des rangées de capillaires à canaux multiples comprenant des gels de gradient de charge, des séries de rangées de compartiments séparés comprenant des gels de densité de charge, des rangées en un format de puce électronique, des rangées de focalisation de masse pour des masses de protéines présélectionnées et des dispositifs de piégeage à compartiments multiples pour rangées de masses présélectionnées ; ou
sous la forme d'une rangée de capillaires à canaux multiples ; ou
sous forme d'une puce électronique comprenant une pluralité de compartiments, chaque compartiment comprenant une matrice comprenant un agent de séparation chargé.

9. Le système selon la revendication 8 dans lequel la matrice est sélectionnée à partir du groupe consistant en du gel de polymère, du verre poreux à pores ouverts, du liquide à haute viscosité et des lits de polymère et du gel de polymère poreux.

10. Le système selon la revendication 9 le liquide à viscosité élevée et les lits de polymère sont séparés en compartiments par une membrane poreuse.

11. Le système selon la revendication 9 le gel de polymère est un gel de polyacrylamide.

12. Le système selon la revendication 11 dans lequel lesdits analytes sont séparés par électrophorèse.

13. Le système selon la revendication 7 dans lequel lesdits analytes sont sélectionnés à partir du groupe consistant en acides aminés, polypeptides, protéines, peptides, acides nucléiques tels que ADN, ARN et oligonucléotides.
